# EUROPEAN PATENT APPLICATION

(11) **EP 2 327 979 A1**
(43) Date of publication of application: **01.06.2011**
(21) Application number: 09810090.2
(22) Date of filing: 01.09.2009
(51) Int. Cl.: G01N 27/327, G01N 27/30, G01N 27/416, G01N 33/543

(54) **ELECTRODE MEMBER FOR SPECIFIC DETECTION OF TEST SUBSTANCE USING PHOTOCURRENT**

(30) Priority: 01.09.2008 JP 2008223350
(71) Applicant: Toto Ltd., Fukuoka 802-8601 (JP)
(72) Inventor: NAKAMURA Masako, Kitakyushu-shi Fukuoka 802-8601 (JP); BEKKI Makoto, Kitakyushu-shi Fukuoka 802-8601 (JP); NARITA Jyunya, Kitakyushu-shi Fukuoka 802-8601 (JP); SONEZAKI Shuji, Kitakyushu-shi Fukuoka 802-8601 (JP); OHARA Hitoshi, Kitakyushu-shi Fukuoka 802-8601 (JP)
(74) Representative: ABG Patentes, S.L.
(86) International application number: PCT/JP2009/065246
(87) International publication number: WO 2010/024446

(57) **Abstract**

Disclosed is an electrode member for specific detection of an analyte using a photocurrent. The electrode member has at least a conductive substrate and an electron-accepting substance provided on said conductive substrate. The aforementioned electron-accepting substance consists at least of a first substance layer that is made of a semiconductor and a second substance that is made of a semiconductor of a kind different from that of the aforementioned semiconductor, a metal or a metal oxide, and is carried on the surface of said first substance layer. With the electrode member, improved detection sensitivity for the test substance and improved measurement precision can be achieved with specific detection of an analyte using a photocurrent.

## Description

### RELATED APPLICATION

This application is based upon and claims the benefit of priority from Japanese Patent Applications No. 2008-223350, filed on September 1, 2008, the contents of which are incorporated herein by reference.

### TECHNICAL FIELD

The present invention relates to an electrode member for specific detection of analytes having a specific binding capability such as nucleic acids, exogenous endocrine disrupting chemicals, or antigens through the utilization of photocurrent, and a process for producing the electrode member.

### BACKGROUND ART

Attempts have recently been made to develop testing systems that can simply detect at low cost hormones and proteins which can predict symptoms and progress of diseases of humans. Further, damage to genital systems, nervous systems and the like by exogenous endocrine disrupting chemicals (environmental hormones) including dioxins is recognized as social problems, leading to a demand for the development of a simple method that can detect the exogenous endocrine disrupting chemicals.

For example, a proposal has been made on the use of photocurrent generated by photoexcitation of a sensitizing dye in the detection of analytes (biomolecules such as DNAs and proteins) by using the principle of solar cells that generate electric energy from light using a sensitizing dye (see, for example, JP 2002-181777 A (patent document 1), JP 2005-251426 A (patent document 2), and JP 2006-507491 T (patent document 3)). According to these methods, excitation light is applied to a dye immobilized on an electrode, current generated by the excitation light irradiation is measured, and the amount of a bound dye is determined from the detected current amount. Accordingly, as compared with a conventional method that detects fluorescence as an image, the methods can realize a reduction in size of the apparatus and can relatively simply detect analytes.

A proposal has also been made on a method for specific detection of analytes (biomolecules such as DNAs and proteins) using photocurrent generated by photoexcitation of a sensitizing dye (see, for example, Nakamura et al. "Koden Henkan Niyoru Atarashii DNA Nihonsa Kenshutu Hoho (Novel method for detecting DNA duplex by photoelectric conversion)," Proceedings of Meeting of the Chemical Society of Japan, Vol. 81 st. No. 1 (2002) item 947 (non-patent document 1)).

Furthermore, some of the inventors of the present invention have previously proposed a method for detection using a working electrode to which an analyte with a sensitizing dye bound thereto has been immobilized through a probe substance (WO 2007/037341 (patent document 4), the contents of disclosure of which is incorporated herein by reference).

Substances such as nucleic acids, exogenous endocrine disrupting chemicals, or antigens are generally present at a low concentration in samples. It is thus logically ideal that electrodes for use in the detection of analytes by photocurrent have high light transmittance, capability of supporting biomolecules, and photoelectron conversion efficiency. According to finding obtained by the present inventors, however, mere use of working electrodes having such properties cannot always provide satisfactory measurements in the measurement of analytes in a low concentration range.

### [Citation List]

### [Patent Literature]

[PTL 1] JP 2002-181777 A
[PTL 2] JP 2005-251426 A
[PTL 3] JP 2006-507491 T
[PTL 4] WO 2007/037341

### [Non patent Literature]

[NPL1] Nakamura et al. "Koden Henkan Niyoru Atarashii DNA Nihonsa Kenshutu Hoho (Novel method for detecting DNA duplex by photoelectric conversion)," Proceedings of Meeting of the Chemical Society of Japan, Vol. 81 st. No. 1 (2002) item 947

### SUMMARY OF INVENTION

### Problems to be Solved by the Invention

The present inventors have now found that the use of a semiconductor and additional another type of substance, which is allowed to exist on the surface of the semiconductor, as electron-accepting substances in an electrode member can realize the detection of analytes having a specific binding capability with higher sensitivity and the quantitative determination of the analytes with higher accuracy. The present invention has been made based on such finding.

Accordingly, an object of the present invention is to provide an electrode member that can realize the detection of analytes having a specific binding capability with higher sensitivity and the quantitative determination of the analytes with higher accuracy.

### Means for solving the problems

According to the present invention, there is provided an electrode member for use in specific detection of an analyte using a photocurrent, the electrode member comprising at least an electroconductive substrate and an electron-accepting substance provided on the electroconductive substrate, the electron-accepting substance comprising at least a layer of a first substance comprising a semiconductor, and a second substance that is supported on a surface of the layer of the first substance and that comprises a semiconductor different from the semiconductor or comprises a metal or a metal oxide.

The present invention can advantageously improve the sensitivity of detection of an analyte at a low concentration and, at the same time, improve a measurement accuracy.

### BRIEF DESCRIPTIOIN OF THE DRAWINGS

[Fig. 1] is a cross-sectional view showing an embodiment of an electrode unit used in the detection of photocurrent.
[Fig. 2] is a graph showing photocurrent values obtained in Example 1.
[Fig. 3] is a graph showing photocurrent values obtained in Example 2.
[Fig. 4] is a graph showing photocurrent values obtained in Example 4.
[Fig. 5] is a graph showing photocurrent values obtained in Example 5.
[Fig. 6] is a TEM photograph at a magnification of 450000 times of a ZnO sputtered electrode obtained in Example 6.
[Fig. 7] is a TEM photograph at a magnification of 1800000 times of a ZnO sputtered electrode obtained in Example 6.
[Fig. 8] is a TEM photograph at a magnification of 450000 times of a nitric acid-treated ZnO sputtered electrode obtained in Example 6.
[Fig. 9] is a TEM photograph at a magnification of 1800000 times of a nitric acid-treated ZnO sputtered electrode obtained in Example 6.

### DESCRIPTION of EMBODIMENT

### Method for specific detection of analyte with photocurrent

A method for specific detection of an analyte using photocurrent comprises: the steps of providing a sample solution containing an analyte, a working electrode having, on its surface, a probe substance that can bind directly or indirectly to the analyte, and a counter electrode; bringing the sample solution into contact with the working electrode in the co-presence of a sensitizing dye to allow the analyte to be specifically bound directly or indirectly to the probe substance and allowing the sensitizing dye to be immobilized on the working electrode by the binding; bringing the working electrode and the counter electrode into contact with an electrolyte medium; and applying light to the working electrode to detect photocurrent that flows across the working electrode and the counter electrode.

### Electrode member

The electrode member according to the present invention is used as a working electrode in the method for specific detection of an analyte with photocurrent by immobilizing the analyte to the surface of the electrode.

### Electroconductive substrate

The electroconductive substrate constituting the electrode member according to the present invention may be formed of an electroconductive material or may have a construction having electroconductive properties ensured by supporting an electroconductive material on a surface of a non-electroconductive support such as glass or plastics.

Electroconductive materials include metals such as platinum, gold, silver, copper, aluminum, rhodium, and indium; electroconductive ceramics such as carbon, carbide and nitride; and electroconductive metal oxides such as indium-tin composite oxide, fluorine-doped tin oxide, antimony-doped tin oxide, gallium-doped zinc oxide, and aluminum-doped zinc oxide, more preferably indium-tin composite oxide (ITO) and fluorine-doped tin oxide (FTO). When the electron-accepting substance per se functions as an electroconductive substrate, there is no need to provide the electroconductive substrate in addition to the electron-accepting substance. In this case, the electron-accepting substance may be used as an electroconductive electron-accepting substance. Further, in the present invention, thin film-shaped or spot-shaped electroconductive materials that as such do not have strength high enough to be used as the support are also included in the electroconductive substrate.

In a preferred embodiment of the present invention, the electroconductive substrate is substantially transparent. Specifically, the light transmittance of the electroconductive substrate is preferably not less than 10%, more preferably not less than 50%, still more preferably not less than 70%. The light transmittance in the above range may realize a cell can be formed to ensure that light is applied from the backside of the working electrode (that is, through the electroconductive substrate) and the light passed through the working electrode excites the sensitizing dye. Further, in a preferred embodiment of the present invention, the electroconductive substrate has a thickness of approximately 0.02 to 10 µm. Furthermore, in a preferred embodiment of the present invention, the electroconductive substrate has a surface resistivity of not more than 100 Ω/cm², more preferably not more than 40 Ω/cm². The lower limit of the surface resistivity of the electroconductive substrate is not particularly limited, but would be generally approximately 0.1 Ω/cm².

### Electron-acceptina substance

The electrode member according to the present invention comprises an electron-accepting substance provided on the electroconductive substrate and the electron-accepting substance comprises at least a layer of a first substance comprising a semiconductor, and a second substance that is supported on a surface of the layer of the first substance and comprises a semiconductor which is different from the semiconductor or made of a metal or a metal oxide.

The first substance is a semiconductor, more preferably an oxide semiconductor, still more preferably a metal oxide semiconductor, most preferably an n-type metal oxide semiconductor. Electrons can be efficiently taken out from the dye by taking advantage of a bandgap of the semiconductor. Further, in a preferred embodiment of the present invention, the semiconductor may have a porous structure or a structure having a concavo-convex surface and this structure is advantageous in that a working electrode having a large surface area can be prepared and the amount of the probe immobilized can be increased.

The electron-accepting substance in the present invention comprises an electron-accepting substance that can receive electrons released from a sensitizing dye, immobilized through a probe substance, in response to photoexcitation. That is, the electron-accepting substance is a substance that can take such an energy level that electrons from the photoexcited labeled dye can be injected thereinto. The energy level (A) on which electrons from the photoexcited labeled dye can be injected means, for example, a conduction band (CB) when a semiconductor is used as an electron-accepting substance; and a Fermi level when a metal is used as an electron-accepting substance. That is, the electron-accepting substance used in the present invention can be one that has a level A that is baser than the energy level of the LUMO of the sensitizing dye, in other words, an energy level lower than that of the LUMO of the sensitizing dye.

Examples of preferred electron-accepting substances include element semiconductors of silicon, germanium or the like; oxide semiconductors of titanium, tin, zinc, iron, tungsten, zirconium, hafnium, strontium, indium, cerium, yttrium, lanthanum, vanadium, niobium, tantalum or the like; perovskite semiconductors of strontium titanate, calcium titanate, sodium titanate, barium titanate, potassium niobate and the like; sulfide semiconductors of cadmium, zinc, lead, silver, antimony and bismuth; selenide semiconductors of cadmium or lead; a telluride semiconductor of cadmium; phosphide semiconductors of zinc, gallium, indium, cadmium or the like; and compound semiconductors of gallium arsenide, copper-indium-selenide, or copper-indium-sulfide. More preferred are silicon, TiO₂ , SnO₂ , Fe₂O₃, WO₃ , ZnO, Nb₂O₅, strontium titanate, indium oxide, CdS, ZnS, PbS, Bi₂S₃, CdSe, CdTe, GaP, InP, GaAs, CuInS₂, CulnSe, and C₆₀. Still more preferred are TiO₂, ZnO, SnO₂, Fe₂O₃ , WO₃, Nb₂O₅, strontium titanate, CdS, PbS, CdSe, InP, GaAs, CulnS₂, and CulnSe₂. Most preferred is TiO₂.
The above semiconductors may be either an intrinsic semiconductor or an impurity semiconductor.

In a preferred embodiment of the present invention, the potential of the conductive band of the semiconductor is lower than the potential of the LUMO of the sensitizing dye, more preferably a potential that meets a relationship of LUMO of sensitizing dye > conductive band of semiconductor > oxidation-reduction potential of electrolyte > HOMO of sensitizing dye. This relationship can allow electrons to be efficiently taken out.

In another preferred embodiment of the present invention, indium-tin composite oxide (ITO) or fluorine-doped tin oxide (FTO) may be used as the electron-accepting substance. Since ITO and FTO function not only as an electron-accepting substance but also as an electroconductive substrate, these materials can constitute an electroconductive electron-accepting layer and allow the electron-accepting layer alone to function also as a working electrode without the provision of an electroconductive substrate.

The second substance constituting the electron-accepting substance in the electrode member according to the present invention is formed of either a semiconductor different in type from the semiconductor of the first substance or a metal or a metal oxide. Specific examples of semiconductors that can constitute the second substance include those exemplified as the semiconductor of the first substance. Further, metals include gold, platinum, silver, copper, aluminum, rhodium, indium, and nickel. The metal embraces metals having a metal bond, that is, "metal elements" in the broad sense. Metal oxides constituting the second substance include non-semiconductor oxides of titanium, tin, zinc, iron, tungsten, zirconium, hafnium, strontium, indium, cerium, yttrium, lanthanum, vanadium, niobium, tantalum or the like.

The second substance is supported on a surface of the layer of the first substance. Here the meaning of the expression "supported on a surface" is not particularly limited as long as the layer of the first substance is present in electrical or physical contact with the second substance. For example, the second substance is stacked in a layer form on the layer of the first substance. Alternatively, the second substance is placed on the layer of the first substance so as to partially cover the surface of the layer of the first substance. In the latter, a method may be adopted in which, after the application of the second substance on the surface of the layer of the first substance, a part of the second substance is removed. Further, the present invention includes an embodiment in which the second substance is locally present, for example, in a particulate form, on the surface of the layer of the first substance.

In a preferred embodiment of the present invention, wherein a ratio of the metal element(s) constituting the second substance to the metal element(s) constituting the first substance, a surface present element ratio (mole ratio), is more than 0 (zero) and less than 1. The surface present element ratio is more preferably more than 0 (zero) and less than 0.27, still more preferably more than 0 (zero) and not more than 0.15, most preferably more than 0 (zero) and not more than 0.10. The surface present element ratio may be determined by an X-ray photoelectric analysis.

In the embodiment where the second substance partially covers the surface of the first substance, the thickness of covering film of the second substance is preferably more than 0 (zero) and less than 2 nm.

The expression "the second substance is supported on the surface of the layer of the first substance" includes an embodiment in which the second substance is in contact with the surface of the layer of the first substance through the interface of the layer of the first substance and the second substance, as well as an embodiment where the first substance is detected in a region of a given depth from the surface of the layer of the first substance. In a preferred embodiment of the present invention, the second substance is preferably present in a region of a depth of 4 nm from the surface of the first substance toward the inside of the first substance, more preferably in a region of a depth of not more than 2 nm from the surface of the first substance toward the inside of the first substance.

The semiconductor or metal or metal oxide as the electron-accepting substance may be either single crystal or polycrystal.

### Process for producing electrode member

Examples of preferred methods for forming the electron-accepting substance on the electroconductive substrate include a method in which a dispersion or a colloidal solution of the electron-accepting substance is coated onto an electroconductive support; a method in which a precursor of fine particles of a semiconductor is coated onto an electroconductive support and is hydrolyzed by moisture in the air to form a film of fine particles (a sol-gel process); sputtering; CVD; PVD; and vapor-deposition. Examples of methods for preparing a dispersion of fine particles of a semiconductor as the electron-accepting substance include, in addition to the above sol-gel process, a method in which the particles are ground in a mortar; a method in which the particles are dispersed while grinding with a mill; or a method in which fine-particles are precipitated in a solvent during the synthesis of a semiconductor and as such are then used. Examples of dispersion media usable herein include water or various organic solvents (for example, methanol, ethanol, isopropyl alcohol, dichloromethane, acetone, acetonitrile, and ethyl acetate). In the dispersion process, if necessary, polymers, surfactants, acids, chelating agents or the like may be used as a dispersing assistant.

Examples of preferred methods for coating a dispersion or colloidal solution of the electron-accepting substance include application methods such as roller coating and dipping; metering methods such as air knife coating, blade coating and the like; wire-bar coating disclosed in Japanese Patent Publication No. 4589/1983, slide hopper coating, extrusion coating, curtain coating, spin coating, and spray coating described in US patent No. 2681294, US patent No. 2761419 , US patent No. 2761791 and the like, as a method that can perform application and metering at the same part.

In a preferred embodiment of the present invention, in the electron-accepting substance applied on the upper surface of the electroconductive substrate, the thickness of the semiconductor of the first substance is preferably 0.1 to 200 µm, more preferably 0.1 to 100 µm, still more preferably 1 to 30 µm, most preferably 2 to 25 µm. When the thickness of the semiconductor of the first substance is in the above-defined range, the amount of the probe substance and the immobilized sensitizing dye per unit projection area can be increased to increase the amount of photocurrent and, at the same time, the loss of generated electrons by charge recombination can also be reduced.

In a preferred embodiment of the present invention, when the electron-accepting substance comprises indium-tin composite oxide (ITO) or fluorine-doped tin oxide as metal oxide (FTO), the thickness of the electron-accepting layer is preferably not less than 1 nm, more preferably 10 nm to 1 µm.

The second substance may be supported on the surface of the layer of the first substance by a method that is properly determined according to the method for first substance formation, and, for example, a vapor deposition method may be used.

An electrode member in another preferred embodiment of the present invention is produced by removing a part of the second substance applied to the surface of the layer of the first substance. Physical removal and chemical removal may be mentioned as methods usable for the removal of the second metal or metal oxide. The physical removal method utilizes, for example, heat, ultrasonic waves, electrochemical removal, and removal with seal. The chemical removal method utilizes dissolution with an acid, an alkaline solution, or a chemical.

Further, when the second substance is zinc oxide, preferably, a part of the applied substance is removed with an acidic solution. Acidic solutions include, for example, nitric acid, hydrochloric acid, acetic acid, hydrogen peroxide, sulfuric acid, organic sulfonic acid, and citric acid solutions. Buffer solutions, for example, succinate buffer solutions and acetate buffer solutions, adjusted to a pH value of less than 2.9 can also be used. The treatment time can be shortened by adjusting the pH value of the acidic solution to preferably less than 2.9, more preferably 2.5 or less. At this time, the time for immersion of the electrode in the acidic solution may be not less than one min.

### Analyte

In the present invention, te analyte is not particularly limited as long as it is specifically bound to a probe substance. In the electrode member according to the present invention, when a probe substance that can be specifically bound directly or indirectly to the analyte is supported on the surface of the electrode member, preferably on the electron-accepting substance, the analyte can be specifically bound directly or indirectly to the probe substance and can be detected.

### Probe substance

Preferably, the electrode member used in the present invention is formed into an electrode with a probe substance, which can be bound directly or indirectly to an analyte, provided on a surface thereof. Biomolecules may be mentioned as suitable probe substances. Specifically, the probe substance may be not only a substance that can be specifically bound directly to the analyte but also a substance that can be specifically bound to a bound product obtained by specifically binding an analyte to a mediating substance such as receptor protein molecules. Subsequently, a sample solution is brought into contact with the working electrode in the co-presence of a sensitizing dye to specifically bind the analyte directly or indirectly to the probe substance and to immobilize the sensitizing dye to the working electrode by taking advantage of this binding. The sensitizing dye is a substance that can release electrons to the working electrode in response to photoexcitation. When the method for specifically binding the analyte is a sandwich method, the probe substance is a primary antibody and the sensitizing dye is labeled on a secondary antibody. On the other hand, when the method for specifically detecting the analyte is a competitive method, the sensitizing dye is labeled on a second analyte that can be specifically bound to the probe substance.

In the present invention, the analyte and the probe substance to be selected may be such that they can be specifically bound to each other. Specifically, in a preferred embodiment of the present invention, a substance having a specific binding capability is the analyte, and a substance that can be specifically bound to the analyte is supported as the probe substance on the working electrode. According to this embodiment, the analyte can be bound directly and specifically onto the working electrode and can be detected. A preferred example of a combination of an analyte and a probe substance in this embodiment is a combination of a single-stranded nucleic acid with a single stranded nucleic acid complementary to the nucleic acid, a combination of an antigen with an antibody, and a combination of a receptor protein with a ligand.

In the present invention, the analyte and the probe substance may be such that they are bound indirectly and specifically to each other. Specifically, in another preferred embodiment of the present invention, a method is adopted in which a substance having a specific binding capability is the analyte, a substance that can be specifically bound to the analyte is allowed to coexist as a mediating substance, and a substance that can be specifically bound to the mediating substance is supported as the probe substance on the working electrode. According to this embodiment, even when the analyte is a substance that cannot be specifically bound to the probe substance, the substance can be detected by binding the substance indirectly and specifically to the working electrode through the mediating substance. In this embodiment, a preferred example of a combination of the analyte, the mediating substance, and the probe substance is a combination of a ligand, a receptor protein molecule that can receive the ligand, and a double stranded nucleic acid that can be specifically bound to the receptor protein molecule. Examples of preferred ligands include exogenous endocrine disrupting chemicals (environmental hormones). The exogenous endocrine disrupting chemicals are substances that are bound to DNAs or peptides through receptor protein molecules, affect gene expression and develop toxicity. According to the method of the present invention, the capability of a protein such as a receptor provided by the analyte to be bound to DNA, peptides or the like can simply be monitored.

The probe substance may be supported on the electrode member by a conventional method. In a preferred embodiment of the present invention, when a single stranded nucleic acid is used as the probe substance, the nucleic acid probe can be bound directly or indirectly to the surface of the working electrode. Thus, the nucleic acid probe with the functional group introduced thereinto as such is immobilized on the carrier by an immobilization reaction. The introduction of the functional group into the end of the nucleic acid can be carried out by an enzymatic reaction or with a DNA synthesizer.

In a preferred embodiment of the present invention, amino, carboxyl, thiol, hydroxyl, phosphoric acid, and diol groups are suitable as functional groups for immobilization of the probe substance to the working electrode. In a preferred embodiment of the present invention, in order to strongly immobilize the probe substance to the working electrode, a material that forms a bridge between the working electrode and the probe substance may also be used. Examples of such bridge formation materials include silane coupling agents, titanate coupling agents, and electroconductive polymers such as polythiophene, polyacetylene, polypyrrole, and polyaniline.

In a preferred embodiment of the present invention, the immobilization of the probe substance can also be efficiently carried out by a simpler method called physical adsorption. The physical adsorption of the probe substance onto the electrode surface can be carried out, for example, as follows. The electrode surface is first cleaned with ultrapure water and acetone using an ultrasonic cleaner. Thereafter, a buffer solution containing a probe substance is dropped onto the electrode, and the electrode is allowed to stand and is then cleaned to adsorb the probe substance onto the surface of the electrode surface.

### Examples

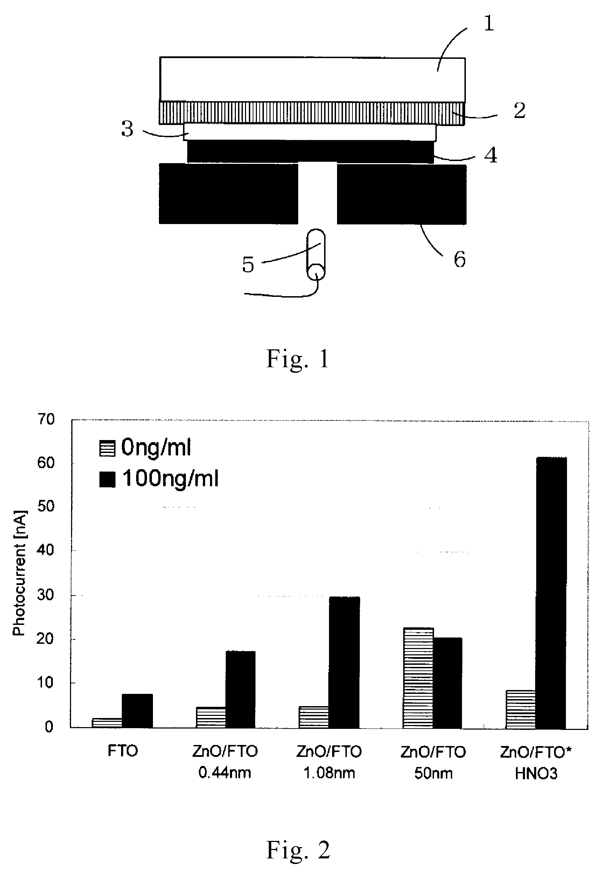

The present invention is further illustrated by the following Examples that are not intended as a limitation of the invention. An apparatus for detection basically had a construction shown in Fig. 1. Specifically, a counter electrode 2 was immobilized on a counter member 1, and an electrode member according to the present invention is placed as a working electrode 4 through an electrolyte pad 3. Further, the working electrode was irradiated with light emitted from a light source 5. A laser beam was applied to spots on the electrode by an electrode unit 6 to obtain photocurrent.

### Example 1: Specific detection of protein with photocurrent using different working electrodes

### Preparation of working electrode

### FTO electrode

A fluorine-doped tin oxide (F-SnO₂:FTO) coated glass (manufactured by Al Special Glass Company, U film, sheet resistance: 12 Ω/cm², shape: 50mm x 26mm) was provided as a substrate for a working electrode.

### ZnO/FTO electrode

ZnO was sputtered on the FTO electrode to a thickness of 0.44 nm (sputtering time 20 sec, 50 W, sputter rate 1.3 nm/min), to a thickness of 1.08 nm (sputtering time 50 sec, 50 W, sputter rate 1.3 nm/min), and to a thickness of 50 nm (sputtering time 8 min, 100 W, sputter rate 6.25 nm/min) to provide electrodes (film thickness: estimated roughly from sputter rate).

### ZnO/FTO* electrode

ZnO was sputtered on the FTO electrode to a thickness of 50 nm (200 W, sputtering time 8 min, sputter rate 6.25 nm/min) to provide an electrode (film thickness: estimated roughly from sputter rate). This electrode was ultrasonically cleaned with acetone, ultrapure water, and acetone successively in that order each for one min, was immersed in a 1 M nitric acid solution (pH 0.2), and was shaken for 5 min. Thereafter, the electrode was thoroughly rinsed with ultrapure water to prepare a ZnO/FTO* electrode.

### Immobilization of probe protein

The working electrodes thus prepared were ultrasonically cleaned with acetone, ultrapure water, and acetone successively in that order each for one min. Thereafter, a pressure-sensitive adhesive seal (thickness: 0.5 mm) with an opening having a diameter of 3 mm formed therein was mounted on the working electrodes and was brought into close contact with the working electrodes. A goat-derived antibody (anti-luciferase polyclonal antibody: manufactured by Promega) was prepared to have a concentration of 10 µg/ml. At this time, a 10 mM phosphate buffer solution (pH 7) containing 250 mM NaCl and 0.05% Tween 20 was used as a solvent. The protein solution was dropped in an amount of 5 µl into the opening in the seal on each of the electrodes, followed by incubation at 37°C for 30 min. Thereafter, the electrodes were cleaned by shaking in ultrapure water for 10 min.

### Binding reaction of test protein

A dye-labeled antigen (Cy5-anti-goat antibody (rabbit): manufactured by Chemicon) was prepared to have a concentration of 100 ng/ml. As the solvent, a 10 mM phosphate buffer solution (pH 7) containing 250 mM NaCl and 0.05% Tween 20 was used. The antigen solution thus prepared was dropped in an amount of 5 µl into the opening in the seal on each of the working electrodes on which the probe protein had been previously immobilized, followed by incubation at 37°C for one hr. Thereafter, the seal placed on the electrodes was peeled off, and the surface of the electrodes was cleaned by rinsing with ultrapure water.

### Specific detection of test protein using photocurrent

The analyte-bound working electrodes prepared above and a counter electrode formed of a glass plate with platinum vapor-deposited thereon were provided. An electrolyte sheet containing an electrolysis solution (0.4 M tetrapropyl ammonium iodide) was held between and brought into contact with both the electrodes. In this example, the working electrode and the counter electrode were disposed so that the protein-immobilized surface of the working electrode faced the platinum vapor-deposited surface of the counter electrode. In such a state that both the electrodes were connected to an electrochemical analyzer, the working electrode was irradiated with light from a laser source (red laser having output of 120 mW, irradiation region diameter of 1 mm, and wavelength of 650 nm) and the current value observed at this time was recorded. The results were as shown in Fig. 2.

The results showed that, as compared with the FTO electrode, ZnO/FTO (0.44 nm, 1.08 nm) and ZnO/FTO* electrodes could realized an improved detection accuracy.

### Example 2: Partial removal by nitric acid treatment

### Preparation of electrodes

A fluorine-doped tin oxide (F-SnO₂:FTO) coated glass (manufactured by Al Special Glass Company, U film, sheet resistance: 12 Ω/cm², shape: 50 mm x 26 mm) was provided as a substrate for a working electrode. Electrodes (ZnO/FTO) were prepared by sputtering ZnO to a thickness of 50 nm on the electrode in the same manner as in Example 1. The electrodes were ultrasonically cleaned with acetone, ultrapure water, and acetone successively in that order each for one min and were then immersed in respective nitric acid solutions having different concentrations. The nitric acid solutions used were prepared to have the following eight pH values (concentrations). The nitric solutions prepared and the immersion times of the electrodes are shown in Table 1. After immersion in the solutions, the electrodes were cleaned by thorough rinsing with ultrapure water.

**[Table 1]**

| pH | Nitric acid concentration | Immersion time |
|---|---|---|
| 0.2 | 1 M | 3 min |
| 1.9 | 10 mM | 3 min |
| 2.2 | 5 mM | 3 min |
| 2.4 | 3.2 mM | 3 min |
| 2.7 | 2 mM | 3 min |
| 2.9 | 1 mM | 3 min |
| 3.5 | 0.2 mM | 3 min |
| 4.0 | 0.1 mM | 3 min |

### Immunoassay

A pressure-sensitive adhesive seal (thickness: 0.5 mm) with an opening having a diameter of 3 mm formed therein was mounted on the working electrodes and was brought into close contact with the working electrodes. A goat-derived antibody solution prepared to have a concentration of 10 µg/ml (10 mM phosphate buffer solution [pH 7], 0.05% Tween 20, 250 mM NaCl) was dropped in an amount of 5 µl into the opening in each of the working electrodes, followed by incubation at 37°C for 30 min. Thereafter, the working electrodes were cleaned by shaking in ultrapure water for 10 min. Thereafter, a Cy5-labeled anti-goat antibody prepared to have concentrations of 10 ng/ml, 100 ng/ml, and 1 µg/ml (10 mM phosphate buffer solution, 0.05% Tween 20, 250 mM NaCl) was dropped in an amount of 5 µl into the opening in the seal, followed by incubation at 37°C for one hr.

### Measurement of photocurrent

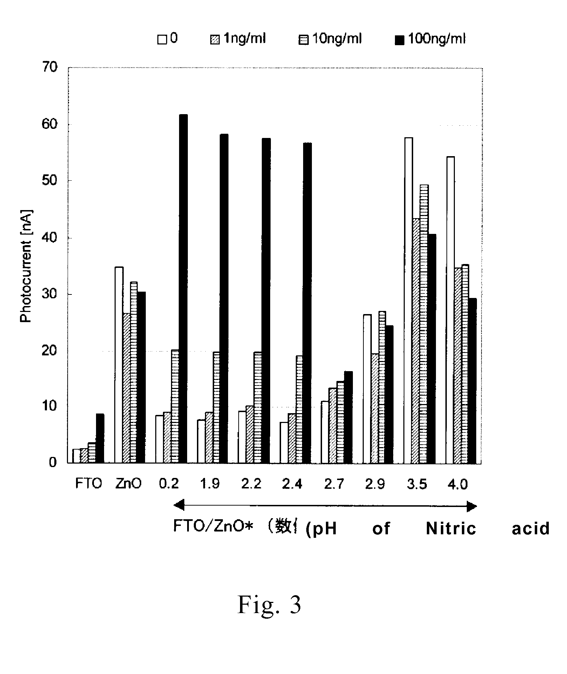

Photocurrent was measured under the conditions described in Example 1. The results were as shown in Fig. 3. It was found from the results that the characteristics of the prepared electrodes varied depending upon pH of nitric acid.

### Example 3: Surface elementary analysis of electrode

Nine types in total of electrodes, i.e., ZnO/FTO electrodes (ZnO film thickness: 0.44 nm, 1.03 nm, 50 nm) and ZnO/FTO* electrodes (nitric acid treatment concentration: 1 M, 5 mM, 3.2 mM, 2 mM, 0.1 mM) prepared in Example 1 and the FTO electrode, were subjected to a surface elementary analysis by an X-ray photoelectric analysis. The analysis was carried out with an X-ray photoelectron spectroscopic device (manufactured by ULVAC-PHI, model PHI 1800) under conditions of X-ray source MgKα (100 W) and analysis area 0.8 x 2.0 mm. The results were as shown in Table 2.

It was found from Table 2 that the amount of zinc present on the surface of the electrodes varied depending upon zinc sputtering time and pH of the nitric acid solution.

**[Table 2]**

| pH of nitric acid solution | pH of nitric acid solution | C | O | Zn | Sn |
|---|---|---|---|---|---|
| FTO | - | 23.1 | 52.7 | 0.0 | 24.2 |
| FTO/ZnO (0.44 nm, untreated) | - | 21.4 | 52.3 | 4.2 | 22.1 |
| FTO/ZnO (1.08 nm, untreated) | - | 23.7 | 49.5 | 10.5 | 16.3 |
| FTO/ZnO (50 nm, untreated) | - | 26.4 | 45.9 | 27.6 | 0.0 |
| FTO/ZnO* (treated with I M nitric acid) | 0.2 | 20.5 | 54.0 | 0.6 | 24.9 |
| FTO/ZnO* (treated with 5 mM nitric acid) | 2.2 | 24.7 | 50.2 | 5.2 | 19.9 |
| FTO/ZnO* (treated with 3.2 mM nitric acid) | 2.4 | 18.5 | 54.7 | 2.1 | 24.8 |
| FTO/ZnO* (treated with 2 mM nitric acid) | 2.7 | 25.0 | 46.5 | 27.1 | 1.4 |
| FTO/ZnO* (treated with 0.1 mM nitric acid) | 4.0 | 23.8 | 37.0 | 29.2 | 0.0 |

(atomic%)

Example 4: Specific detection of protein with photocurrent using various electrodes having nitric acid-treated sputtered surface

### Preparation of working electrodes

### FTO electrode

A fluorine-doped tin oxide (F-SnO₂:FTO) coated glass (manufactured by Al Special Glass Company, U film, sheet resistance: 12 Ω/cm², shape: 50 mm x 26 mm) was provided as a substrate for a working electrode.

### ITO/FTO electrode

ITO was sputtered on the FTO electrode to a thickness of 50 nm (sputtering time 8 min, 100 W, sputter rate 6.25 nm/min) to provide an electrode (film thickness: estimated roughly from sputter rate).

### WO₃/FTO electrode

WO₃ was sputtered on the FTO electrode to a thickness of 50 nm (sputtering time 8 min, 100 W, sputter rate 6.25 nm/min) to provide an electrode (film thickness: estimated roughly from sputter rate).

### SrTiO₃/FTO electrode

SrTiO₃ was sputtered on the FTO electrode to a thickness of 50 nm (sputtering time 8 min, 100 W, sputter rate 6.25 nm/min), to provide an electrode (film thickness: estimated roughly from sputter rate).

### Preparation of nitric acid-treated electrodes

The ITO/FTO, WO₃/FTO, and SrTiO₃/FTO electrodes were ultrasonically cleaned with acetone, ultrapure water, and acetone successively in that order each for one min, were immersed in a 1 M nitric acid solution (pH 0.2), and were shaken for 15 min. Thereafter, the electrodes were thoroughly rinsed with ultrapure water. The treated electrodes thus obtained were designated as ITO/FTO*, WO₃/FTO*, and SrTiO₃/FTO*, respectively.

### Immobilization of probe protein

The working electrodes thus prepared were ultrasonically cleaned with acetone, ultrapure water, and acetone successively in that order each for one min. Thereafter, a pressure-sensitive adhesive seal (thickness: 0.5 mm) with an opening having a diameter of 3 mm formed therein was mounted on the working electrodes and was brought into close contact with the working electrodes. A goat-derived antibody (anti-luciferase polyclonal antibody: manufactured by Promega) was prepared to have a concentration of 10 µg/ml. As the solvent, a 10 mM phosphate buffer solution (pH 7) containing 250 mM NaCl and 0.05% Tween 20 was used. The protein solution was dropped in an amount of 5 µl into the opening in the seal on each of the electrodes, followed by incubation at 37°C for 30 min. Thereafter, the electrodes were cleaned by shaking in ultrapure water for 10 min.

### Binding reaction of test protein

A dye-labeled antigen (Cy5-anti-goat antibody (rabbit): manufactured by Chemicon was prepared to have a concentration of 100 ng/ml. At this time, a 10 mM phosphate buffer solution (pH 7) containing 250 mM NaCl and 0.05% Tween 20 was used as a solvent. The antigen solution thus prepared was dropped in an amount of 5 µl into the opening in the seal on each of the working electrodes on which the probe protein had been previously immobilized, followed by incubation at 37°C for one hr. Thereafter, the seal placed on the electrodes was peeled off, and the surface of the electrodes was cleaned by rinsing with ultrapure water.

### Specific detection of test protein using photocurrent

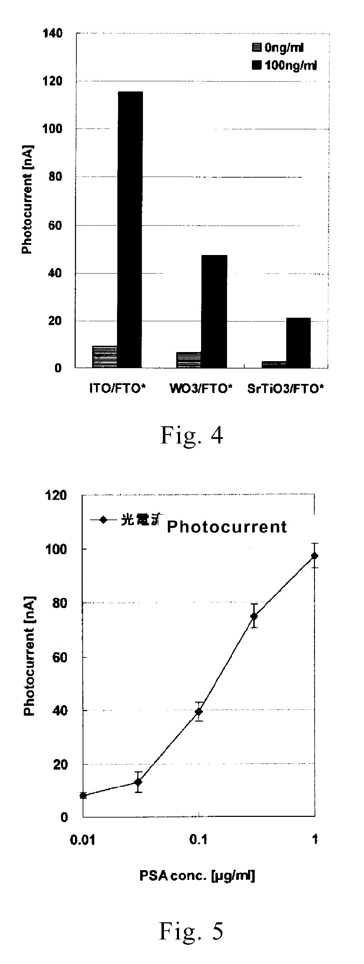

The analyte-bound working electrodes prepared above and a counter electrode formed of a glass plate with platinum vapor-deposited thereon were provided. An electrolyte sheet containing an electrolysis solution (0.4 M tetrapropyl ammonium iodide) was held between and brought into contact with both the electrodes. At this time, the working electrode and the counter electrode were disposed so that the protein-immobilized surface of the working electrode faced the platinum vapor-deposited surface of the counter electrode. In such a state that both the electrodes were connected to an electrochemical analyzer, the working electrode was irradiated with light from a laser source (red laser having output of 120 mW, irradiation region diameter of 1 mm, and wavelength of 650 nm) and the current value observed at this time was recorded. The results were as shown in Fig. 4. The results revealed that, also when ITO, WO₃, and SrTiO₃ were used as the second substance, after the nitric acid treatment, the test protein could be specifically detected using photocurrent.

### Example 5: Specific detection of analyte by sandwich immunoassay using prepared electrodes

### Preparation of working electrodes

### FTO electrode

A fluorine-doped tin oxide (F-SnO₂:FTO) coated glass (manufactured by Al Special Glass Company, U film, sheet resistance: 12 Ω/cm², shape: 50 mm x 26 mm) was provided as a substrate for a working electrode.

### ZnO/FTO electrode

ZnO was sputtered on the FTO electrode to a thickness of 50 nm (sputtering time 8 min, 100 W, sputter rate 6.25 nm/min) to provide electrodes (film thickness: estimated roughly from sputter rate).

### Preparation of nitric acid-treated electrodes

The ZnO/FTO electrodes were ultrasonically cleaned with acetone, ultrapure water, and acetone successively in that order each for one min, were immersed in a 1 M nitric acid solution (pH 0.2), and were shaken for 15 min. Thereafter, the electrodes were thoroughly rinsed with ultrapure water. The treated electrodes thus obtained were designated as ZnO/FTO*.

### Immobilization of probe protein

The working electrodes thus prepared were ultrasonically cleaned with acetone, ultrapure water, and acetone successively in that order each for one min. Thereafter, a pressure-sensitive adhesive seal (thickness: 0.5 mm) with an opening having a diameter of 3 mm formed therein was mounted on the working electrodes and was brought into close contact with the working electrodes. An anti-prostate specific antibody (manufactured by Fitzgerald) was prepared to have a concentration of 15 µg/ml. As the solvent, a 10 mM phosphate buffer solution (pH 7.4) was used. The antibody solution was dropped in an amount of 5 µl into the opening in the seal on the electrodes, followed by incubation at 37°C for 10 min. Thereafter, the electrodes were cleaned by shaking in a 10 mM phosphate buffer solution for 10 min.

### Binding reaction of test protein

A Cy5-labeled anti-prostate specific antigen antibody (manufactured by Biodesign) was prepared to have a concentration of 5 µg/ml. At this time, a 10 mM phosphate buffer solution (pH 7) containing150 mM NaCl and 0.05% Tween 20 was used as a solvent. An antigen (prostate specific antigen) was added at predetermined concentrations to the prepared antigen solution, followed by pipetting for thorough stirring. Each of the solutions thus prepared was dropped in an amount of 5 µl into the opening in the seal on the working electrodes on which the probe protein had been previously immobilized, followed by incubation at 37°C for 10 min Thereafter, the seal placed on the electrodes was peeled off, and the surface of the electrodes was cleaned by rinsing with the buffer solution and ultrapure water.

### Specific detection of test protein using photocurrent

The analyte-bound working electrodes prepared above and a counter electrode formed of a glass plate with platinum vapor-deposited thereon were provided. An electrolyte sheet containing an electrolysis solution (0.4 M tetrapropyl ammonium iodide) was held between and brought into contact with both the electrodes. In this exmaple, the working electrode and the counter electrode were disposed so that the protein-immobilized surface of the working electrode faced the platinum vapor-deposited surface of the counter electrode. In such a state that both the electrodes were connected to an electrochemical analyzer, the working electrode was irradiated with light from a laser source (red laser having output of 120 mW, irradiation region diameter of 1 mm, and wavelength of 650 nm) and the current value observed at this time was recorded. The results were as shown in Fig. 5. The results revealed that the detection of an analyte by sandwich immunoassay using photocurrent was possible.

### Example 6: Analysis of nitric acid-treated ZnO electrode by TEM

The ZnO sputtered electrode and the ZnO nitric acid-treated electrode were analyzed by a TEM analysis and an EDS analysis. The TEM analysis was performed with a field-emission transmission electron microscope (manufactured by JEOL Ltd.; model JEM-2010F) at an accelerating voltage of 200 kV. The EDS analysis was performed in an analysis area of 1 nm with an Si (Li) semiconductor detector (manufactured by Noran; model UTW).

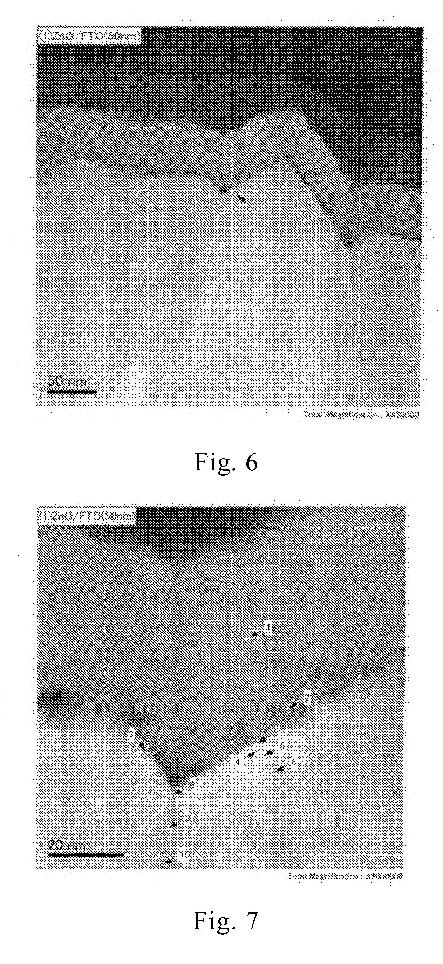

TEM photographs of the ZnO sputtered electrode were as shown in Figs. 6 and 7. In ZnO/FTO, about 50 nm-thick ZnO layer was observed on the FTO layer. An EDS spectrum showed that Zn was present on an FTO layer side from the ZnO layer/FTO layer interface (spots 3, 4, and 7). At a portion (spot 5) located at a position of about 4 nm from the same interface toward the inside of the FTO layer, the concentration of Zn was considered to be around the lower detection limit of EDS. Accordingly, although it is difficult to discuss, a very small Zn-L peak was observed, suggesting a possibility that Zn is present. At a portion (spot 6) located at a position of about 10 nm from the interface toward the inside of the FTO layer, the presence of Zn was not observed. Likewise, also at a grain boundary (spot 8) of the FTO layer, the presence of Zn was observed. At a portion (spot 9) located at a position of about 10 nm toward the inside of the FTO layer, there is a possibility that Zn is present, although a clear peak was not observed. At a portion (spot 10) located at a position of about 20 nm toward the inside of the FTO layer, the presence of Zn was not observed.

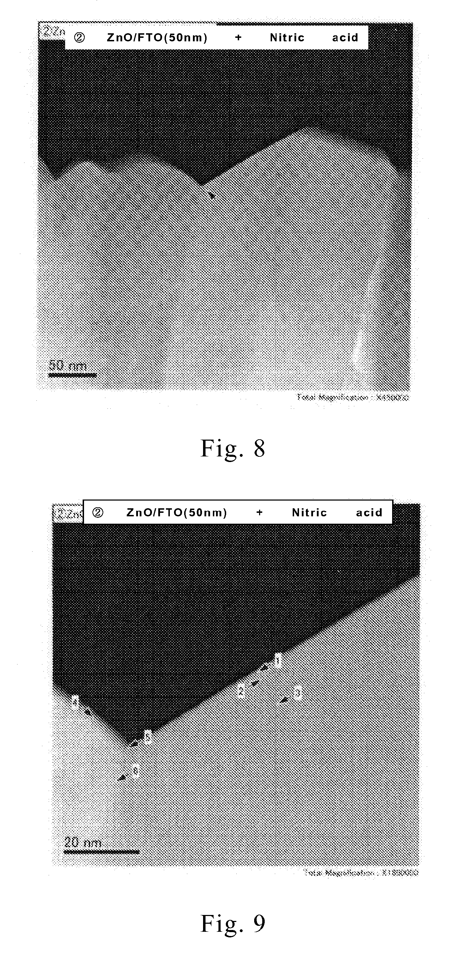

TEM photographs of the ZnO nitric acid-treated electrode were taken and are shown in Figs. 8 and 9. A special layer such as a residual ZnO layer was not present on the surface of the FTO layer. An EDS spectrum suggests a possibility that Zn is present on the surface (spots 1 and 4) of the FTO layer. At a portion (spot 2) located at a position of about 2 nm from the surface of the FTO layer toward the inside of the FTO layer, the presence of Zn was not observed. Likewise, also at a grain boundary (spot 5), there is a possibility that Zn is present. At a portion (spot 6) located at a position of about 10 nm toward the inside of the FTO layer, the presence of Zn was not observed.

At a number of analysis points, the concentration of Zn was below the lower detection limit (order of %). However, it is considered from the above analysis results that, for the ZnO sputtered electrode, Zn is diffused by about 4 nm toward the FTO layer side from the ZnO layer/FTO layer interface. On the other hand, for the nitric acid-treated electrode, there is a possibility that Zn is present at a portion located at a position of less than 2 nm from the surface of the FTO layer. It is estimated from these matters that the Zn-diffused portion present on the surface of the FTO layer, together with about 50 nm-thick ZnO layer, has been removed by the nitric acid treatment.

## Claims

1. An electrode member for use in specific detection of an analyte using a photocurrent,
the electrode member comprising at least an electroconductive substrate and an electron-accepting substance provided on the electroconductive substrate,
the electron-accepting substance comprising at least a layer of a first substance comprising a semiconductor, and a second substance that is supported on a surface of the layer of the first substance and that comprises a semiconductor which is different from the semiconductor or comprises a metal or a metal oxide.

2. The electrode member according to claim 1, wherein the second substance is formed by being subjected to, after deposition on the surface of the layer of the first substance, a step of removing a part of the deposited second substance.

3. The electrode member according to claim 1, wherein a ratio of the metal element(s) constituting the second substance to the metal element(s) constituting the first substance, a surface present element ratio (mole ratio), is more than 0 (zero) and less than 1.

4. The electrode member according to claim 3, wherein the surface present element ratio is less than 0.27.

5. The electrode member according to claim 1, wherein the second substance covers a part of the surface of the first substance, and the thickness of the covering of the second substance is more than 0 (zero) and less than 2 nm.

6. The electrode member according to claim 1, wherein the second substance is present in a region of a depth of 4 nm as measured from the surface of the first substance toward the inside of the first substance.

7. The electrode member according to claim 1, wherein the first substance is an indium-tin composite oxide or fluorine-doped tin oxide.

8. The electrode member according to claim 1, wherein the second substance is zinc oxide, indium-tin composite oxide, tungsten oxide, or strontium titanate.

9. The electrode member according to claim 1, wherein a probe substance is additionally supported on the electron-accepting substance.

10. A process for producing an electrode member according to claim 1, the process comprising at least the steps of:
forming a semiconductor-containing layer on an electroconductive substrate to form the layer of the first substance; and
depositing a semiconductor different from the semiconductor or a metal or a metal oxide onto a surface of the layer to deposit the second substance.

11. The process according to claim 10, wherein, after the deposition of the second substance, a part of the second substance is removed.

12. The process according to claim 11, wherein the removal is carried out by bringing the second substance into contact with an acidic aqueous solution.

13. The process according to claim 12, wherein the acidic aqueous solution has a pH value of less than 2.9.
